# EUROPÄISCHE PATENTANMELDUNG

(11) **EP 2 460 622 A2**
(43) Veröffentlichungstag der Anmeldung: **06.06.2012**
(21) Anmeldenummer: 11187435.0
(22) Anmeldetag: 02.11.2011
(51) Int. Cl.: B23Q 3/155, B23Q 3/157

(54) **Vorrichtung zum automatischen Werkzeugwechsel**

(30) Priorität: 05.12.2010 DE 202010016228 U
(71) Anmelder: T + S-Jakob GmbH & Co. KG, 87459 Pfronten (DE)
(72) Erfinder: Versch, Alexander, 87629 Füssen (DE)
(74) Vertreter: Charrier, Rapp & Liebau

(57) **Zusammenfassung**

Die Erfindung betrifft eine Vorrichtung zum automatischen Werkzeugwechsel mit mindestens einem Kettenmagazin (1) und einer Übergabeeinrichtung (2) zur Entnahme bzw. zur Ablage von Werkzeugaufnahmen (4) oder Werkzeugen (5) an dem Kettenmagazin (1), wobei das Kettenmagazin (1) mehrere zwischen Kettenlaschen (6) angeordnete und als Kettenbolzen dienende hülsenförmige Aufnahmeelemente (7) zur Aufnahme der Werkzeugaufnahmen (4) oder Werkzeuge (5) enthält. Zur Erhöhung der Speicherkapazität sind die Aufnahmeelemente (7) zur Aufnahme und Halterung zweier diametral gegenüberliegender Werkzeugaufnahmen (3) bzw. Werkzeuge (5) ausgebildet.

## Beschreibung

Die Erfindung betrifft eine Vorrichtung zum automatischen Werkzeugwechsel mit einem Kettenmagazin und einer Übergabeeinheit zur Entnahme bzw. zur Ablage von Werkzeugaufnahmen oder Werkzeugen an dem Kettenmagazin.

Bei herkömmlichen Werkzeugwechselvorrichtungen dieser Art weisen die Kettenmagazine an den Ketten montierte oder in die Kette integrierte Werkzeugaufnahmen auf, die zur Halterung einzelner Werkzeugaufnahmen bzw. Werkzeuge konzipiert sind. Aus der DE 296 07 885 U1 ist z.B. ein Kettenmagazin bekannt, bei dem die hülsenförmigen Werkzeugaufnahmen die Kettenbolzen zwischen den einzelnen Kettengliedern des Kettenmagazins bilden und zur Aufnahme einer einzelnen Werkzeugaufnahme dienen. Ein Nachteil derartiger Kettenmagazine besteht darin, dass auf die Kette durch die einseitig auskragenden Werkzeuge Kippmomente wirken, die besonders bei langen und schweren Werkzeugen zu einer einseitigen Beanspruchung und einer Durchhängung der Kette führen können. Außerdem ist die Speicherkapazität derartiger Kettenmagazine beschränkt, da größere Kettenlängen auch mit einer entsprechend großen Bauweise verbunden sind und eine Vergrößerung der Kettenlänge in der Regel zu einem größeren Durchhang des Kettenmagazins besonders bei Werkzeugen mit großem Gewicht führt.

Aufgabe der Erfindung ist es, eine Vorrichtung der eingangs genannten Art zu schaffen, die bei geringerem Platzbedarf und kompakter Bauweise eine Erhöhung der Speicherkapazität ermöglicht.

Diese Aufgabe wird durch eine Vorrichtung mit den Merkmalen des Anspruchs 1 gelöst. Vorteilhafte Ausgestaltungen und zweckmäßige Weiterbildungen der erfindungsgemäßen Vorrichtung sind Gegenstand der Unteransprüche.

Bei der erfindungsgemäßen Vorrichtung sind die zwischen den Kettenlaschen des Kettenmagazins angeordneten und als Kettenbolzen dienenden hülsenförmige Aufnahmeelemente zur Aufnahme der Werkzeugaufnahmen oder Werkzeuge derart ausgebildet, dass die Aufnahmeelemente zur Aufnahme und Halterung zweier diametral gegenüberliegender Werkzeugaufnahmen bzw. Werkzeuge geeignet sind. Durch eine derartige Ausgestaltung kann die Speicherkapazität des Kettenmagazins auch ohne Verlängerung der Kette erhöht werden. Zur Speicherung von 100 Werkzeugen werden lediglich 50 als Kettenbolzen dienende Aufnahmeelemente und 52 Kettenlaschen benötigt. Eine dadurch mögliche Reduzierung der Kettenlänge wirkt sich positiv auf den Platzbedarf aus und auch die Werkzeugbereitstellungszeit kann verkürzt werden. Durch die geringere Anzahl an Kettengliedern kann außerdem die bei Ketten übliche Längung der Kette und die insbesondere bei längeren Ketten auftretende Stauchungsproblematik verringert werden. Außerdem bietet die beidseitige Aufnahme der Werkzeuge an den Aufnahmeelementen die Möglichkeit, ähnlich schwere Werkzeuge einander gegenüberliegend anzuordnen, so dass sich die Kippmomente aufheben und dadurch einseitige Belastungen vermieden werden können. Aufgrund der Platz sparenden Anordnung der Werkzeuge können die Werkzeugwechselvorgänge auch mit geringen Verfahrbewegungen durchgeführt werden, wodurch die Werkzeugwechsel- und Werkzeugbereitstellungszeiten verkürzt werden können.

In einer konstruktiv einfachen und zweckmäßigen Ausführung der Erfindung weisen die Aufnahmeelemente zwei gegenüberliegende Öffnungen mit entgegengesetzt konischen Aufnahmen für einen Spannkegel der Werkzeugaufnahmen oder Werkzeuge auf.

In einer weiteren vorteilhaften Ausführung sind die Aufnahmeelemente des Kettenmagazins über zwei zueinander parallele Kettenräder geführt. Dadurch ist eine stabile Lagerung der Kette auch bei weiter auskragenden Werkzeugen erreichbar. Durch die doppelseitige Abstützung der Aufnahmeelemente wird die Kette außerdem in sich stabiler und verwindungssteifer.

An den Aufnahmeelementen sind zweckmäßigerweise Halteeinrichtungen zur lösbaren Halterung der Werkzeugaufnahmen oder Werkzeuge angeordnet. Die Halteeinrichtungen können einen innerhalb einer Radialbohrung des Aufnahmeelements verschiebbar geführten und durch eine Feder nach innen beaufschlagten Haltestift aufweisen. Der Haltestift kann an seinem inneren Ende einen keilförmigen Eingriffsbereich zum Eingriff in eine Radialnut an einem Spannzapfen der Werkzeugaufnahmen oder Werkzeuge aufweisen. Dadurch kann die Werkzeugaufnahme oder das Werkzeug in das Aufnahmeelement eingezogen werden.

Die Übergabeeinrichtung enthält in einer besonders vorteilhaften Ausführung eine über eine Linearführung in mehreren Achsen verfahrbare Greiferanordnung mit mindestens einem um eine Vertikalachse drehbaren und um eine Horizontalachse schwenkbaren Werkzeuggreifer. Dadurch können die Werkzeugaufnahmen nicht nur an beiden Seiten der Aufnahmeelemente entnommen bzw. eingesetzt, sondern auch für die Einwechslung bzw. die Entnahme an einem weiteren Werkzeugmagazin auch zu diesem hin und wieder zurück transportiert werden. Außerdem können die Werkzeugaufnahmen am Kettenmagazin auch mit geringen Verfahrbewegungen umsortiert und von der einen zu anderen Seite transportiert werden. Die Übergabeeinrichtung ist nicht nur für den Werkzeugtransport zwischen mehreren Werkzeugmagazinen konzipiert. Mit Hilfe der Übergabeeinrichtung kann auch der Werkzeugtransport zwischen einem Werkzeugmagazin und einer Arbeitsspindel einer Werkzeugmaschine erfolgen.

An den hülsenförmigen Aufnahmeelementen sind zweckmäßigerweise Indexierelemente zur Vorgabe einer genauen Stellung der Werkzeugaufnahmen innerhalb der Aufnahmeelemente vorgesehen. Besonders bei Werkzeugen mit einer vorgegebenen Schneidenposition bzw. einer vorgegeben Orientierung kann somit deren Stellung zur Einwechslung in die ordnungsgemäße Bearbeitungsposition vorgegeben werden.

Weitere Besonderheiten und Vorteile der Erfindung ergeben sich aus der folgenden Beschreibung eines bevorzugten Ausführungsbeispiels anhand der Zeichnung. Es zeigen:
- **Figur 1:**: eine Vorrichtung zum automatischen Werkzeugwechsel mit einem Kettenmagazin und einer Übergabeeinrichtung in einer Perspektive;
- **Figur 2:**: eine schematische Darstellung des in Figur 1 gezeigten Kettenmagazins in einer Perspektive;
- **Figur 3:**: eine vergrößerte Teilansicht des Kettenmagazins von Figur 2 mit einem Kettenrad in einer Seitenansicht;
- **Figur 4:**: eine vergrößerte Teilansicht des Kettenmagazins von Figur 2 mit einem Kettenrad in einer Vorderansicht;

- **Figur 5:**: ein hülsenförmiges Aufnahmeelement des Kettenmagazins von Figur 2 mit diametral angeordneten Werkzeugaufnahmen in einer Vorderansicht;
- **Figur 6:**: eine vergrößerte Schnittansicht entlang der Linie B-B von Figur 4;
- **Figur 7:**: eine vergrößerte Darstellung des Bereichs D von Figur 5 und
- **Figur 8:**: eine vergrößerte Darstellung der Übergabeeinrichtung von Figur 1.

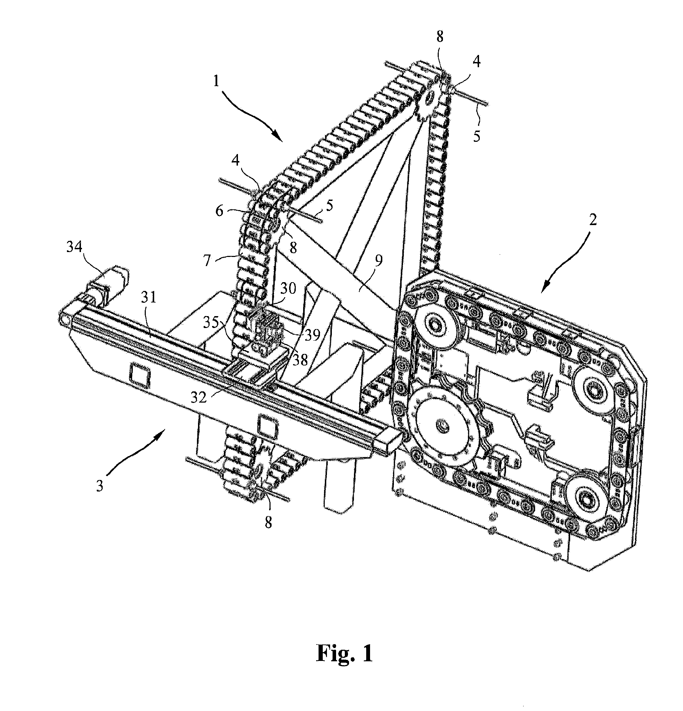

In Figur 1 ist eine Vorrichtung zum automatischen Werkzeugwechsel an einer Werkzeugmaschine mit einem als Hintergrundmagazin ausgebildeten ersten Kettenmagazin 1, einem an der nicht gezeigten Werkzeugmaschine angeordneten zweiten Werkzeugmagazin 2 und einer Übergabeeinrichtung 3 zur Entnahme bzw. zur Ablage von Werkzeugaufnahmen 4 mit Werkzeugen 5 an den beiden Kettenmagazinen 1 und 2 gezeigt. Das Werkzeugmagazin 2 dient zur Bereitstellung der für die aktuelle Bearbeitung an der Werkzeugmaschine benötigten Werkzeuge, während das als Hintergrundmagazin ausgeführte Kettenmagazin 1 für die Bereitstellung weiterer Werkzeuge und zur Versorgung mehrerer Werkzeugmaschinen in einer Maschinengruppe eingesetzt werden kann. Mit Hilfe der Übergabeeinrichtung 3 kann der Werkzeugtransport zwischen dem Kettenmagazin 1 und dem Werkzeugmagazin 2 oder weiteren Werkzeugmagazinen erfolgen.

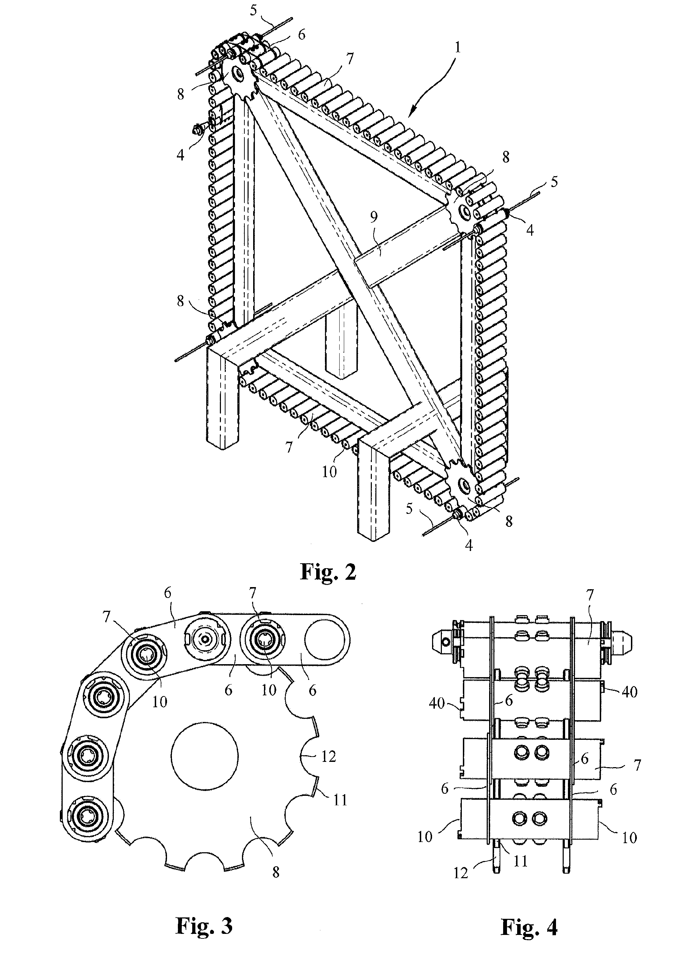

Das in Figur 2 gesondert dargestellte Kettenmagazin 1 enthält eine durch Kettenlaschen 6 und hülsenförmige Aufnahmeelemente 7 als Kettenbolzen gebildete Endloskette, die mit Hilfe von Kettenrädern 8 über die Ecken eines hier rechteckigen Traggestells 9 geführt ist. Zumindest eines der Kettenräder 8 ist motorisch angetrieben, so dass die hülsenförmigen Aufnahmeelemente 7 in eine vorgegebene Übergabeposition bewegt werden können.

Wie besonders aus den Figuren 3 und 4 hervorgeht, sind die aufeinanderfolgenden hülsenförmigen Aufnahmeelemente 7 durch zueinander parallele innere und äußere Kettenlaschen 6 verbunden. Die hülsenförmigen Aufnahmeelemente 7 weisen an ihren beiden gegenüber den Kettenlaschen 6 nach außen vorstehenden Enden jeweils eine Aufnahmeöffnung 10 zur Aufnahme zweier diametral gegenüberliegender Werkzeugaufnahmen 4 auf. An der Außenseite der Kettenräder 8 sind zwischen in Umfangsrichtung beabstandeten Zähnen 11 an den Außendurchmesser der Aufnahmeelemente 6 angepasste halbrunde Vertiefungen 12 für die Aufnahme der hülsenförmigen Aufnahmeelemente 7 vorgesehen. Bei der gezeigten Ausführungsform sind an den Ecken des Traggestells 9 jeweils zwei zueinander parallele Kettenräder 8 zur doppelten Abstützung der Aufnahmeelemente 7 angeordnet. Durch die doppelte Abstützung der Aufnahmeelemente 7 ist eine stabile Lagerung der Endloskette erreichbar. Die Endloskette wird dadurch auch in sich stabiler und verwindungssteif.

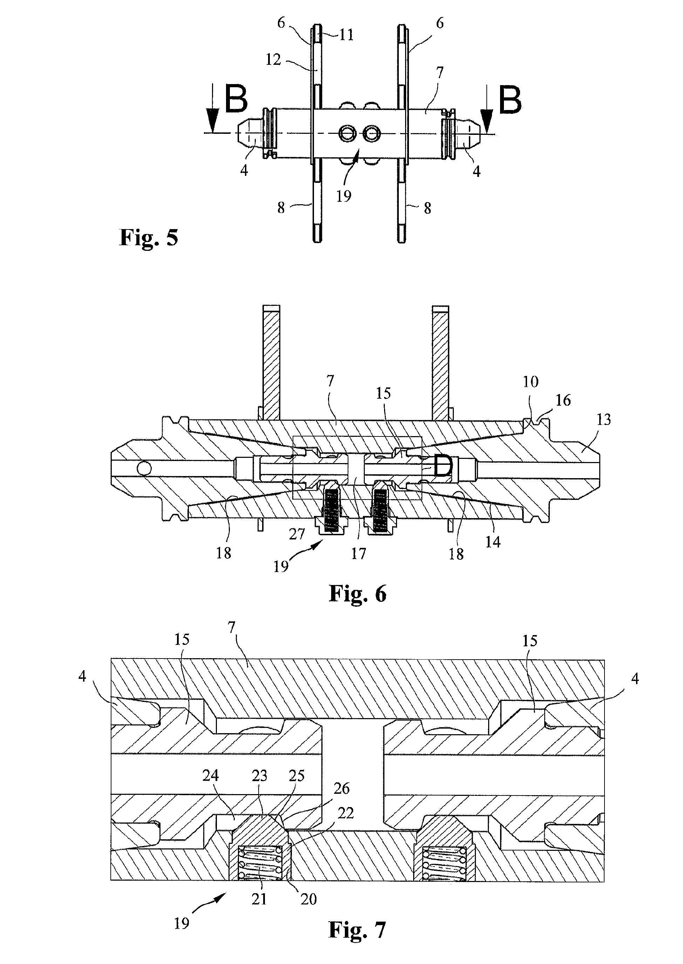

Beim gezeigten Ausführungsbeispiel sind die in Figur 6 im Maßstab 1:2 dargestellten Werkzeugaufnahmen 4 als SK-Werkzeugaufnahmen mit einem vorderen Aufnahmeteil 13, einem konischen Spannkegel 14, einem hinteren Spannzapfen 15 und einer äußeren Greiferrille 16 ausgeführt. Die hülsenförmigen Aufnahmeelemente 7 haben an der Innenseite einen inneren zylindrischen Teil 17 für die Aufnahme der Spannzapfen 15 und zwei gegenkonische Aufnahmebereiche 18 zur Aufnahme der Spannkegel 14 zweier gegenüberliegender Werkzeugaufnahmen 4. An den hülsenförmigen Aufnahmeelementen 7 sind außerdem Halteeinrichtungen 19 zur lösbaren Halterung der Werkzeugaufnahmen 4 innerhalb der hülsenförmigen Aufnahmeelemente 7 vorgesehen.

Aus Figur 7 geht hervor, dass die Halteeinrichtungen 19 einen innerhalb einer Radialbohrung 20 des hülsenförmigen Aufnahmeelements 7 verschiebbar geführten und durch eine Feder 21 nach innen beaufschlagten Haltestift 22 aufweisen. Der Haltestift 22 enthält an seinem inneren Ende einen keilförmigen Eingriffsbereich 23 zum Eingriff in eine Radialnut 24 des Spannzapfens 15. An dem keilförmigen Eingriffbereich 23 des Haltestifts 22 ist eine schräge Haltefläche 25 zur Anlage an einer schrägen Seitenfläche 26 der Radialnut 24 vorgesehen. Dadurch kann die Werkzeugaufnahme 4 in das hülsenförmige Aufnahmeelement 7 eingezogen werden. Die Feder 21 ist zwischen dem Haltestift 22 und einer in Figur 6 gezeigten äußeren Haltebuchse 27 eingespannt.

An den hülsenförmigen Aufnahmeelementen 7 sind außerdem in Figur 4 gezeigte Indexierelemente 40 zur Vorgabe einer genauen Stellung der Werkzeugaufnahmen 4 in Umfangsrichtung bezüglich der Aufnahmeelemente 7 angebracht. Besonders bei Werkzeugen mit einer vorgegebenen Schneidenposition kann somit deren Stellung bezüglich des Werkzeuggreifers 30 zur Einwechslung in die ordnungsgemäße Bearbeitungsposition vorgegeben werden. Bei der in Figur 4 gezeigten Ausführung sind die Indexierelemente 40 als stirnseitige Nutensteine zum Eingriff in eine entsprechende Nut an den Werkzeugaufnahmen 4 ausgeführt. Die Nutensteine 40 an den gegenüberliegenden Seiten der Aufnahmeelemente 7 sind in Umfangsrichtung gesehen um 180° versetzt angeordnet, dass die diametral gegenüberliegenden Werkzeugaufnahmen 4 um 180° gedreht sind. Die Indexierelemente 40 können aber auch gleich ausgerichtet oder auch an anderen Stellen der Aufnahmeelemente 7 angebracht sein.

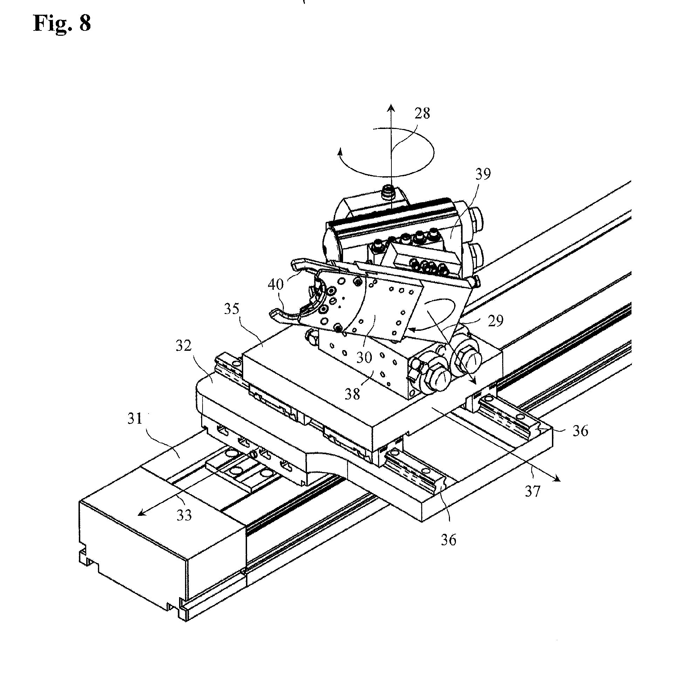

Die in Figur 1 gezeigte Übergabeeinrichtung 3 enthält eine zwischen dem ersten Kettenmagazin 1 und dem hier ebenfalls als Kettenmagazin ausgebildeten zweiten Werkzeugmagazin 2 über eine Linearführung in mehreren Achsen verfahrbare Greiferanordnung, die gemäß Figur 8 einen um eine Vertikalachse 28 drehbaren und um eine Horizontalachse 29 schwenkbaren Werkzeuggreifer 30 aufweist.

Wie aus Figur 8 hervorgeht, enthält die Linearführung eine Führungsschiene 31 und einen Kreuzschlitten, der durch einen entlang der Führungsschiene 31 in einer ersten Linearachse 33 horizontal verschiebbar geführten und mittels eines in Figur 1 gezeigten Antriebs 34 gesteuert verfahrbaren Längsschlitten 32 und einen auf dem Längsschlitten 32 über Führungsschienen 36 in einer zur ersten Linearachse 33 senkrechten zweiten Linearachse 37 horizontal verschiebbaren Querschlitten 35 gebildet wird. Auf dem Querschlitten 35 ist die Greiferanordnung mit einem Unterteil 38 und einem auf dem Unterteil 38 um die Vertikalachse 28 drehbar angeordneten Oberteil 39 montiert. Der Werkzeuggreifer 30 ist an dem Oberteil 39 um die Horizontalachse 29 schwenkbar angebracht.

Bei dem in Figur 1 gezeigten Ausführungsbeispiel sind das Kettenmagazin 1 und das ebenfalls als Kettenmagazin ausgebildete Werkzeugmagazin 2 rechtwinklig zueinander angeordnet, wobei die Führungsschiene 31 parallel zu den hülsenförmigen Aufnahmeelementen 7 des ersten Kettenmagazins 1 und parallel zum Werkzeugmagazin 2 verläuft. Ein oder mehrere nebeneinander angeordnete Kettenmagazine 1 können aber auch parallel zu dem Werkzeugmagazin 2 angeordnet sein, wobei die Führungsschiene 31 zwischen dem Kettenmagazin 1 und dem Werkzeugmagazin 2 zu diesen rechtwinklig verläuft. Bei entsprechender Anordnung von Kettenmagazin 1 und Werkzeugmagazin 2 kann die Greiferanordnung auch an einem linear verfahrbaren Schlitten angebracht sein, der auf einem um eine Achse schwenkbaren Unterteil geführt ist. Auch andere Anordnungen der Greiferanordnung sind möglich. Der Werkzeuggreifer 30 ist beim gezeigten Ausführungsbeispiel als Einfachgreifer mit einem starren und einen beweglichen Greiferarm 40 oder zwei beweglichen Greiferarmen 40 zum Greifen der Werkzeugaufnahmen 4 an der Greiferrille 16 ausgeführt. Der Werkzeuggreifer 30 kann aber auch als Doppelgreifer ausgeführt sein.

Wie aus Figur 1 hervorgeht, kann durch die Übergabeeinheit 3 der Werkzeugtransport zwischen dem Kettenmagazin 1 und dem hier ebenfalls als Kettenmagazin ausgeführten Werkzeugmagazin 2 erfolgen. Über den in zwei Linearachsen verfahrbaren und um zwei Achsen drehbaren Werkzeuggreifer 30 können die Werkzeugaufnahmen 4 an beiden Seiten der Aufnahmeelemente 7 entnommen bzw. eingesetzt und für die Einwechslung bzw. die Entnahme zum Werkzeugmagazin 2 und wieder zurück transportiert werden. Außerdem können die Werkzeugaufnahmen 4 am Kettenmagazin 1 auch umsortiert und von der einen zu anderen Seite transportiert werden.

## Patentansprüche

1. Vorrichtung zum automatischen Werkzeugwechsel mit mindestens einem Kettenmagazin (1) und einer Übergabeeinrichtung (2) zur Entnahme bzw. zur Ablage von Werkzeugaufnahmen (4) oder Werkzeugen (5) an dem Kettenmagazin (1), wobei das Kettenmagazin (1) mehrere zwischen Kettenlaschen (6) angeordnete und als Kettenbolzen dienende hülsenförmige Aufnahmeelemente (7) zur Aufnahme der Werkzeugaufnahmen (4) oder Werkzeuge (5) enthält, **dadurch gekennzeichnet, dass** die Aufnahmeelemente (7) zur Aufnahme und Halterung zweier diametral gegenüberliegender Werkzeugaufnahmen (3) bzw. Werkzeuge (5) ausgebildet sind.

2. Vorrichtung nach Anspruch 1, **dadurch gekennzeichnet, dass** die Aufnahmeelemente (7) zwei gegenüberliegende Öffnungen (10) mit entgegengesetzt konischen Aufnahmen (18) für Spannkegel (14) der Werkzeugaufnahmen (4) oder Werkzeuge (5) enthalten.

3. Vorrichtung nach Anspruch 1 oder 2, **dadurch gekennzeichnet, dass** die Aufnahmeelemente (7) des Kettenmagazins (1) über zwei zueinander parallele Kettenräder (8) geführt sind.

4. Vorrichtung nach einem der Ansprüche 1 bis 3, **dadurch gekennzeichnet, dass** an den Aufnahmeelementen (7) Halteeinrichtungen (19) zur lösbaren Halterung der Werkzeugaufnahmen (4) oder Werkzeuge (5) angeordnet sind.

5. Vorrichtung nach Anspruch 4, **dadurch gekennzeichnet, dass** die Halteeinrichtungen (19) einen innerhalb einer Radialbohrung (20) des Aufnahmeelements (7) verschiebbar geführten und durch eine Feder (21) nach innen beaufschlagten Haltestift (22) aufweisen.

6. Vorrichtung nach Anspruch 5, **dadurch gekennzeichnet, dass** der Haltestift (22) an seinem inneren Ende einen keilförmigen Eingriffsbereich (23) zum Eingriff in eine Radialnut (24) eines Spannzapfens (15) der Werkzeugaufnahmen (4) oder Werkzeuge (5) enthält.

7. Vorrichtung nach einem der Ansprüche 1 bis 6, **dadurch gekennzeichnet, dass** die Übergabeeinrichtung (2) eine über eine Linearführung (31, 32, 35) in mehreren Achsen verfahrbare Greiferanordnung (30, 38, 39) mit mindestens einem um eine Vertikalachse (28) drehbaren und um eine Horizontalachse (29) schwenkbaren Werkzeuggreifer (30) enthält.

8. Vorrichtung nach Anspruch 7, **dadurch gekennzeichnet, dass** die Linearführung (31, 32, 35) eine Führungsschiene (31) und einen Kreuzschlitten mit einem entlang der Führungsschiene (31) verfahrbaren Längsschlitten (32) und einem quer zum Längsschlitten (32) verfahrbaren Querschlitten (35) umfasst.

9. Vorrichtung nach Anspruch 8, **dadurch gekennzeichnet, dass** die Greiferanordnung (30, 38, 39) ein auf dem Querschlitten (35) angeordnetes Unterteil (38) und ein auf diesem um die Vertikalachse (28) drehbar angeordnetes Oberteil (39) enthält.

10. Vorrichtung nach Anspruch 9, **dadurch gekennzeichnet, dass** der Werkzeuggreifer (30) an dem Oberteil (39) um die Horizontalachse (29) schwenkbar angeordnet ist.

11. Vorrichtung nach einem der Ansprüche 1 bis 10, **dadurch gekennzeichnet, dass** an den hülsenförmigen Aufnahmeelementen (7) Indexierelemente (40) zur Vorgabe einer genauen Stellung der Werkzeugaufnahmen (4) innerhalb der Aufnahmeelemente (7) vorgesehen sind.
